# EUROPEAN PATENT APPLICATION

(11) **EP 1 569 148 A2**
(43) Date of publication of application: **31.08.2005**
(21) Application number: 05003765.4
(22) Date of filing: 22.02.2005
(51) Int. Cl.: G06F 17/60

(54) **Systems and methods for automatically determining and/or inferring component end of life (EOL)**

(30) Priority: 25.02.2004 US 547619 P; 13.07.2004 US 889840
(71) Applicant: Rockwell Automation Technologies, Inc., Mayfield Heights, OH 44124 (US)
(72) Inventor: Morrison, Jamens R., Chardon OH 44024 (US); Clay, William Steven, Brunswick Hills OH 44212 (US)
(74) Representative: Jung HML

(57) **Abstract**

The present invention relates to a system and methodology for facilitating managing product life cycle. A component that determines relevance of components to a product; an analyzing component (120) that determines, infers or predicts obsolescence, level of risk to EOL of a subset of the components. A substitution component (240) that identifies replacement components and suppliers for the subset of components. A cost analysis component (210) that determines material/components cost savings, and redesign cost implementation and/or redesign cost avoidance.

## Description

### CROSS REFERENCE TO RELATED APPLICATIONS

This application claims priority to U.S. Provisional Application 60/547,619, filed on February 25, 2004 and entitled SYSTEMS AND METHODS FOR AUTOMATICALLY DETERMINING AND/OR INFERRING COMPONENT END OF LIFE (EOL), the entirety of which is incorporated herein by reference.

### TECHNICAL FIELD

The present invention relates generally to systems and methods for automatically determining and/or inferring component end of life (EOL), level of risk to EOL, and the impact thereof.

### BACKGROUND OF THE INVENTION

In 1998, electronic component manufacturers discontinued 34,000 parts. In years 2001 and 2002, that number rose to 55,000 and 120,000 parts respectively according to PCNalert, a company that tracks supply base end-of-life notices. With recent market trends this rapidly growing rate may decline; however, the average yearly EOL level is expected to remain markedly high.

Companies that maintain large product portfolios, for example, can utilize over 25,000 semiconductor, passive, and magnetic components, which can be sourced by more than 300 manufacturers. Many of these products consist of 10-20 different suppliers providing some 20 to 50 different electronic components. Also, a majority of these products have a minimum life of 10 years, with many customers keeping them in service for decades, especially within the industrial, automotive, telecommunications, and military market sectors. Further, a sampling of 23,000 components utilized by some 10,000 products lead to the determination that approximately 54% of such components were beyond their mature phase of life, with some 34% declining in use, or identified for phase out. Moreover, a survey of Fortune 500 companies, conducted by CSM Strategies, reported that users of these types of components experienced, on average, a 3% per year rate of EOL for their active bill of materials (BOM) - this places a significant percentage of components at risk to EOL.

An aggregation of the aforementioned factors, present a problem of not "if", but "when" will a given product be affected by end-of-life events. Conventional mitigation of an EOL occurrence does nothing to anticipate or elevate within a near horizon, the probable occurrences of the next event on the same product. Consequently, product changes driven by these events are typically disjoint, which places an increasing burden on already constrained development and continuation engineering resources. Such demand leads to accelerated inventory costs due to bridge buys needed to maintain product shipments until resources can be implemented. This ultimately results in decreased revenue, increased risk to new product development, and customer dissatisfaction.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention relates to system(s) and methodology(s) for determining end of life (EOL), and level of risk to EOL of components and the impact thereof. As discussed above, in 1998, electronic component manufacturers discontinued 34,000 parts ― the equivalent of 153 parts per business day. Many products consist of multiple components, electronic and mechanical, provided by as many as 50 different suppliers. Such products can have a fairly extensive useful life (e.g., at least 10 years), with many customers using the products for decades. The subject invention addresses the issue of such product(s) being affected by an obsolete or high "RISK" component, and provides a novel scheme for mitigating negative impact associated with component obsolescence.

One particular aspect of the invention provides for a database tool that is employed to determine, infer and/or predict which components (e.g., processors, memory chips, resistors, opto-electronics, software, mechanical components...) will likely need replacement over the course of a product's expected life. Such aspect of the invention includes a material risk index (MRI) tool that ties a set of algorithms to a detailed and unique database. It analyzes a product's bill of material and scores components on a scale (e.g., from zero to five), where the greatest score for example indicates highest risk to End-of-Life (EOL). The tool can also track components of a product, as well as its suppliers. Regular dialog with suppliers about when a specific component will be discontinued, coupled with market data, technology life cycle and other information, allows the Material Risk Index tool to predict what products need attention and when. Product engineers and/or an automated aspect of the system can begin finding replacements, scheduling redesign work and notifying others that changes are on the way. Thus, the invention facilitates proactively maintaining product life cycles based in part on a fact based framework for deciding when to perform product upgrades.

The invention provides for switching a supplier or component, in a manner which can be transparent to a customer. The system facilitates components being backward-compatible, and available in suitable quantities and for a time frame required to support the expected product life. It is to be appreciated that, in accordance with a particular aspect of the invention, individuals can be tasked with keeping the data fresh and the tool useful. For example, value engineers can run risk analyses on product components and work with design engineers to make sure there are migration paths for the respective components - engineers can communicate with part suppliers on a regular basis and provide supplier roadmaps. These roadmaps can be used as indicators from the suppliers themselves about expected life, technology and market trends of the specific components they provide. Moreover, another aspect of the invention provides for computer-based systems to automatically perform at least a subset of the aforementioned task that can be carried out by humans.

To the accomplishment of the foregoing and related ends, certain illustrative aspects of the invention are described herein in connection with the following description and the annexed drawings. These aspects are indicative of various ways in which the invention may be practiced, all of which are intended to be covered by the present invention. Other advantages and novel features of the invention may become apparent from the following detailed description of the invention when considered in conjunction with the drawings.

### BRIEF DESCRIPTION OF THE DRAWINGS

Figs. 1-4 are schematic block diagrams illustrating a material risk index (MRI) analysis system(s), in accordance with the present invention.

Figs. 5-8 illustrate various methodologies in accordance with an aspect of the present invention.

Figs. 9 and 10 illustrate systems which employ material risk analysis information, in accordance with the present invention.

Figs. 11 and 12 illustrate representative computing and operational environments, in accordance with the present invention.

### DETAILED DESCRIPTION OF THE INVENTION

The present invention relates to system(s) and methodology(s) for determining end of life (EOL) of components and impact thereof. The invention addresses the issue of such product(s) being affected by an EOL component, and provides a novel scheme for mitigating negative impact associated with component obsolescence.

As used in this application, the terms "component," "analyzer," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

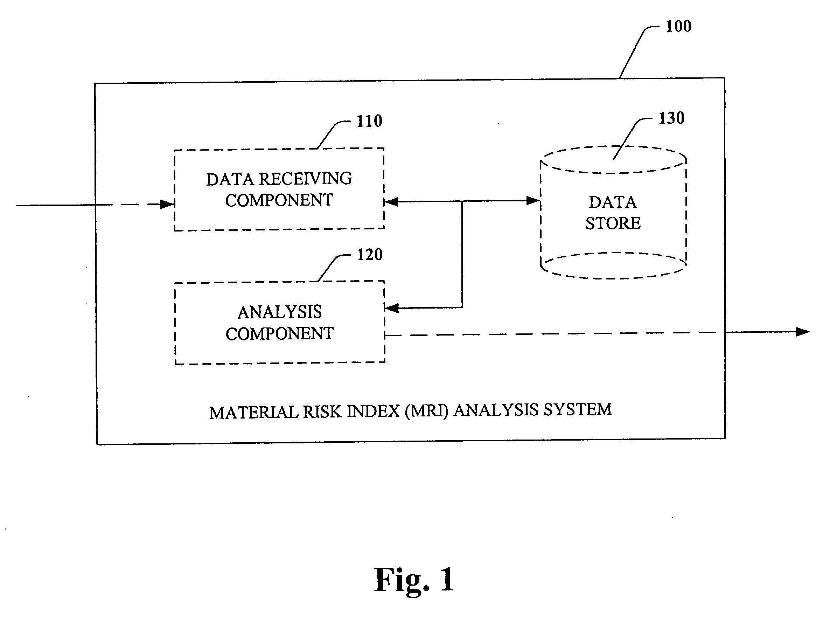

Referring initially to Fig. 1, a material risk index (MRI) analysis system 100 is illustrated in accordance with a high-level aspect of the present invention. The MRI system 100 includes a data-receiving component 110 that receives information pertaining to products and components thereof as well as extrinsic data. An analysis component 120 analyzes a subset of the received data in connection with determining potential obsolescence and RISK to EOL of components of products. A data store 130 can store information from either or both of the receiving component 110 and analysis component 120 as well as rules, tables, indices, algorithms, historical data, schemas, etc., to facilitate material risk analysis in accordance with the invention. The analysis component 120 evaluates the received data and determines, infers and/or predicts risk and/or impact of potential obsolescence or unavailability of a component in connection with a product as well as impact on super classes of products/process/systems employing the products. The system 100 can facilitate taking proactive measures to mitigate negative consequences associated with obsolescence/unavailability of certain components. For example, suitable replacement components and suppliers thereof can be identified and engaged.

The system 100 can leverage off of human-based assistance in connection with component evaluation and/or performing largely computer-based analysis and automated action (*e.g.*, via a decision-theoretic approach). For example, one particular embodiment of the invention can take into consideration the cost associated with continuing to employ a component (or replacing the component) for example as a function of various client/customer-based metrics, and balance the benefits of such action versus the associated cost thereof ― utility based analyses.

In accordance with one specific implementation of the present invention (that is not intended to limit the scope of the invention as defined by the hereto appended claims), the material risk index (MRI) system 100 analyzes a product's bill of material and scores a component on a scale from zero to N (N being an integer), where N indicates the highest risk of EOL. It is based on the following equation:

SMRI = b₀ + b₁(SSC) + b₂(ASC) + b₃(LCC) + b₄(CL) + ... +b_{N}(AV)

**SSC** is the Supplier Status Code ― each supplier part, and thus supplier, is categorized into technology classifications. Then each supplier is assigned a preference for every part (relative to the part/supplier classification) it provides. A supplier can be rated Preferred, Alternate, Migrate Away or Other. Parts from preferred suppliers are considered lower risk. Supplier performance, and financial data are considered when determining these ratings.

**ASC** is an Alternate Source Code - a part with multiple approved sources, or possible alternatives not yet approved, is a lower risk than one with a single, sole source.

**LCC** is the Component Life Cycle Code - a curve-fitting algorithm is used to generate a score based on life cycle phase data of each part. The life cycle phase can be Introduction, Growth, Early Mature, Mature, Late Mature, Decline, Phase-Out or Obsolete. A mature component is lowest risk, while an obsolete one is highest risk. Further, components in their Introduction or Growth Phase are higher risk than one in its mature stages.

**CL** is the part Classification Life Cycle Code - the categories are the same as the LCC factor, but applied to an entire part classification or technology. The algorithm generates a score based on the Class Life Cycle phase and an estimate for the number of years to obsolete for that supplier part, as-well-as the entire part class. The individual component and the part classification life cycles can be very different. For example, 4000 series CMOS logic as a component technology is approaching obsolescence and should be avoided in new designs. However, individual parts within this classification may be considered in the late mature or early decline phase of their life cycle.

**AV** is the Availability Code - this factor is based on the forecasted number of years to end of life, various last-time-buy and price list indicators, breadth of customer base, supplier/class obsolescence ratio, and component market sector driver. A high number of years to end of life, large customer base and usage, low obsolescence ratio and no last-time-buy notices or pricing activity translate into a lower risk. The "bn" coefficients are obtained through multi-regression analysis to best fit the risk factors data. Since internal company part numbers can have multiple supplier part numbers associated with them, each supplier part number is assigned an MRI score (SMRI). In turn, each internal or company part number is assigned an MRI score (RMRI) based on the minimum supplier (SMRI) score, using the formula RMRI = Min (SMRI1 , SMRI2, ....SMRIn).

Traditionally, when a company receives a part change notice (PCN) or end-of-life (EOL) notification from a component supplier, typically one of four things may occur. A last-time buy may be performed to assure that the affected products can be manufactured throughout their forecasted life times. This defensive purchasing of parts can tie up millions of dollars in inventory, some of which may never be used. The subject MRI system 100 helps to minimize last-time-buy purchases by eliminating high-risk components prior to EOL. A replacement part may be qualified or the product(s) may be redesigned to eliminate these high-risk components. A "bridge buy" for the obsolete part is often then required to ensure that product can be manufactured until the new part/new design is available, and the redesign cycle is generally very costly and resource intensive. Even worse, multiple EOL notices mean a product may have to begin another redesign cycle within months of completing one. As a result, fewer engineering resources are available for new product development. The MRI helps to mitigate the number of redesigns by addressing high-risk components concurrently. Aftermarket sources of the component may be found or parts may be salvaged from other products, but these actions are not feasible for high-volume usage. MRI helps to minimize aftermarket purchases by eliminating high-risk components before EOL. The affected products may be declared obsolete. "This is usually unacceptable to both customers and to product suppliers" ― the MRI helps to avoid obsoleting products.

Components can fall into numerous technology classifications, and the present invention provides for adding and/or deleting classifications over the life of the tool. Optionally, the tool can be configured to not track low-risk commodities (e.g., connectors, screws or magnetics), but rather track high-risk commodities (e.g., electronic components that come from suppliers).

The MRI system 100 can be used to support product life cycle management (PLM), a business strategy that creates a data record for a given product over its entire life cycle, from concept to end of life. The subject system 100 is unique compared to conventional product life cycle management systems/methods because it tracks component availability and measures the risk of continued use, not just date that a supplier says something will be discontinued. Availability is not just notification of obsolescence or lead-time, but also comprises availability from alternate sources and its breadth of usage in market(s). For example, the invention can track how many companies are buying a part, because if only three companies are using it, and one decides not to, that would put it at a higher risk of becoming unavailable. Mature products of a portfolio, for example, can be the ones more likely to have problems with sourced components. Many of such legacy products can be 10 years old or older. The MRI tool 100 substantially facilitates managing "continuation engineering" of such products, by determining, inferring and/or predicting what products need attention and when. For example, a user of one particular embodiment of the invention could simply press a button and the tool would rank all catalog numbers (which could be in the thousands) and display to the user a ranked order list of these products by level of risk to component EOL, as well as identify to the user which ones he/she is responsible for and facilitate assignment of resources to address such risk(s).

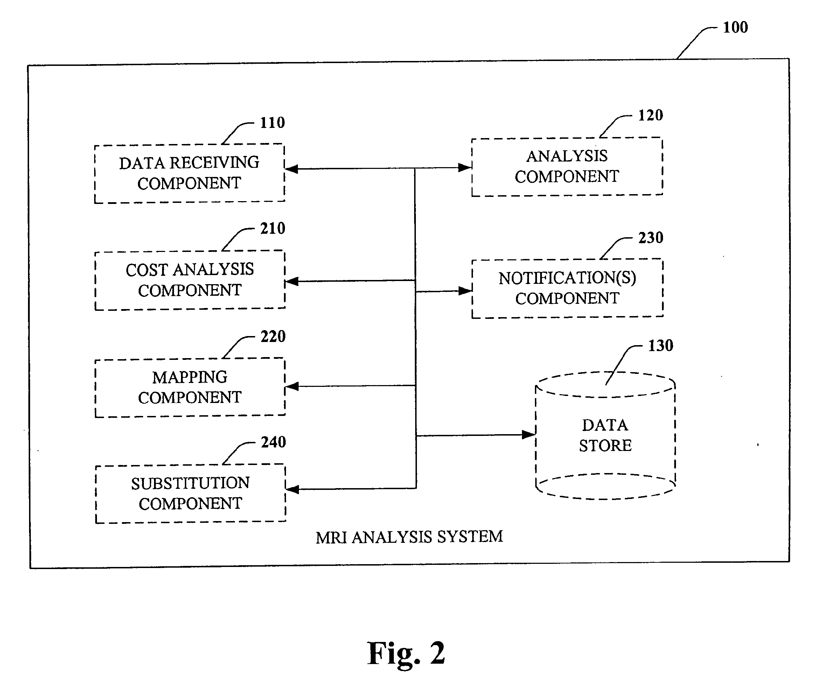

Fig. 2 illustrates another aspect of the system 100. The system 100 further includes a cost analysis component 210 that determines savings relative to redesign avoidance efforts not previously identified prior to initiating a Materials Risk Analysis. More particularly, for example, the cost analysis component 210 can determine that an equivalent to a product at or near EOL is unnecessary since a new design does not include that product. Also, the cost analysis component 210 can provide a database of cost saving measures such as design suggestions from various users. In this manner, a more intelligent analysis can be performed and facilitate the analysis component 120 rendering an appropriate analysis in connection with specific systems, products, and components vis-à-vis particular suppliers, product sellers and customers.

A mapping component 220 facilitates mapping components to suppliers, products, products to other products, processes, and systems in order to facilitate a substitution component effecting an optimized selection of appropriate replacement components. A notification component 230 can provide notification(s) to individuals, computers or systems regarding risk analyses and recommendations in accordance therewith by the system 100. The notification component 230 can communicate *via* a plurality of disparate mediums such as a LAN, WAN, wireless, *etc.* to provide EOL information pertaining to replacement of a particular product to a user. Additionally, the notification component 230 can be programmed such that messages are sent (*e.g.*, to a user, database, *etc.*) on a periodic basis, every time a condition is met, when polled, *etc.*

A substitution component 240 can be employed to provide a list of suitable products utilized in place of a specific component. Such a list can comprise various parameters associated with substitute products such as size, power consumption, delivery time, cost, *etc.* For example, if a particular desired non-contact sensor is currently unavailable the substitution component 240 can provide a listing of equivalent non-contact sensors to the user. The substitution component 240 can provide a ranking of suitable substitutes based on various parameters specified by the user. For instance, if equivalent output rate of an electrical component is important to the user and equivalent cost is not, the substitution component 240 can provide a ranking based on such user specified importance levels. In this manner, costs associated with the unavailability of specific desired products can be mitigated.

In addition, the substitution component 240 can determine the cost to implement the replacement components and subsequent cost saving associated with making such a substitution. Implementation of the product can include associated installation costs such as wiring, control requirements, labor, user familiarity with product and the like. Thus, the substitution component 240 can provide a comprehensive cost metric to the user.

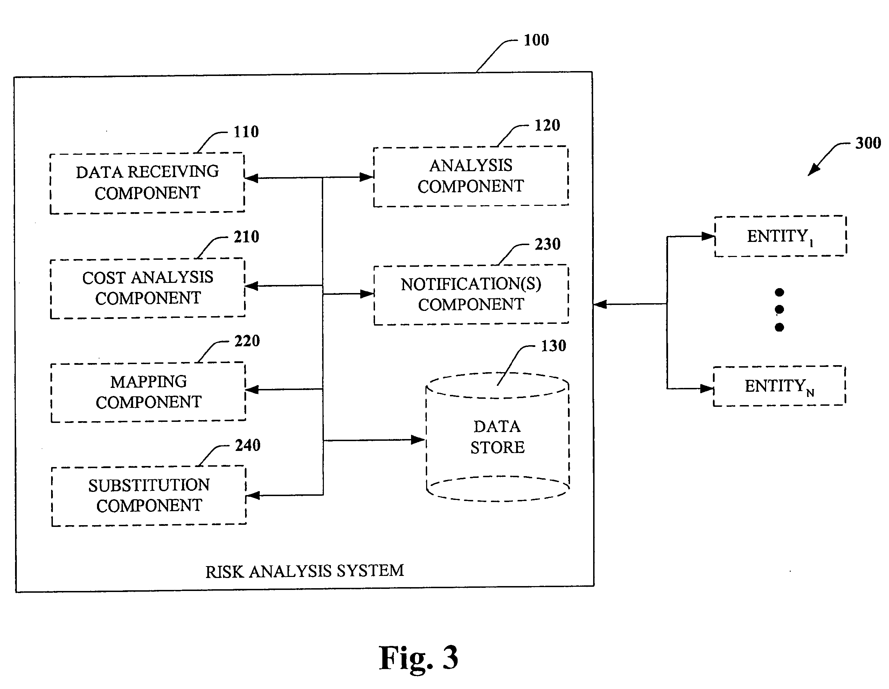

Fig. 3 illustrates that the system 100 can communicate with a plurality of entities 300 (e.g., individuals, groups, suppliers, alternate suppliers, customers, devices, computers, systems...) in connection with component risk analyses - data can be received from as well as transmitted to the entities. The system 100 can communicate with one or more entities 300 *via* any number of methods and/or protocols such as wireless communication, Bluetooth, LAN, ControlNet, Ethernet, WAN (Internet), *etc.*

Also, the entities 300 can be grouped into various subsets such that each group can receive substantially the same information related to the obsolescence of currently utilized products. Such information can be tailored to a particular group's needs. For instance, a control-engineering group familiar with control related properties of a product may wish to view such technical information whereas a purchasing group may wish to view selected cost metrics associated with a product as described *supra*. In addition, parameters relating to data delivery, formatting and the like can be consistent for a particular group(s).

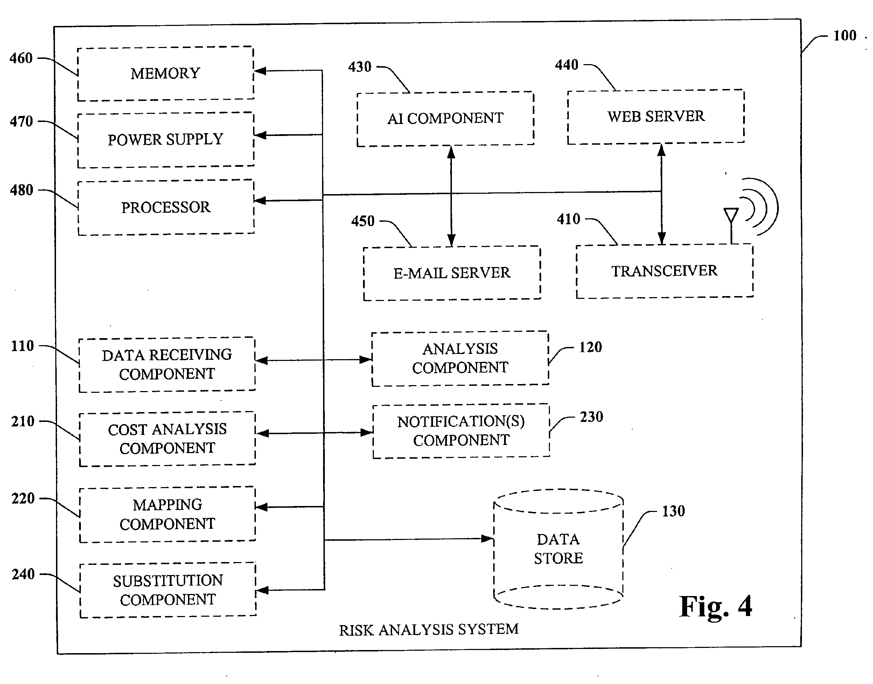

Fig. 4 illustrates the MRI analysis system 100 with various components that affect various functionalities in accordance with the invention. An artificial intelligence (AI) component 430 provides for effecting various automated functionality in accordance with the invention. The AI component 430 can employ classifiers in connection with determination, inference, diagnostics, prognostics, and prediction. It is to be appreciated that classification in accordance with various aspects of the present invention can employ a probabilistic *and*/*or* statistical-based analysis (*e*.*g*., factoring into the analysis utilities and costs) to prognose or infer an action that a user desires to be automatically performed. A classifier can be a function that maps an input attribute vector, x = (x₁, x₂, x₃, ... , xₙ), to a confidence that the input belongs to a class-that is, f(x) = *confidence*(*class*)*.* For example, a support vector machine (SVM) classifier can be employed - an SVM generally operates by finding a dynamically changing hyper surface in the space of possible inputs. Other directed and undirected models of classification approaches include, e.g., naive Bayes, Bayesian networks, decision trees, and probabilistic classification models providing different patterns of independence can be employed. Classification as used herein also is inclusive of statistical regression that is utilized to develop models of priority.

The system 100 also includes a web server 440, e-mail server 450, and a wireless transceiver 410 in connection with various communicative aspects of the invention. The web server 440 can facilitate hosting of various pages, *etc.* to provide access to desired EOL information remotely from an intranet, Internet, LAN or the like. Various Internet protocols can be employed to provide such information to a user such as HTML, Java, XML, *etc.* Similarly, the email server 450 can provide EOL information *via* email in various formats and at user specified times. For instance, a user can have an email sent to a purchasing department when a product's EOL is within one year.

In accordance with an aspect of the subject invention, a wireless transceiver 410 can be employed to broadcast EOL information to users. Various wireless devices such as cell phones, PDAs, palmtop computers and the like can receive such EOL information. In addition, the wireless transceiver 410 can receive feedback, commands, *etc.* from disparate users that wish to communicate with the system 100. The system 100 also includes a memory 460, power supply 470 and processor 480 discussed in greater detail *infra*.

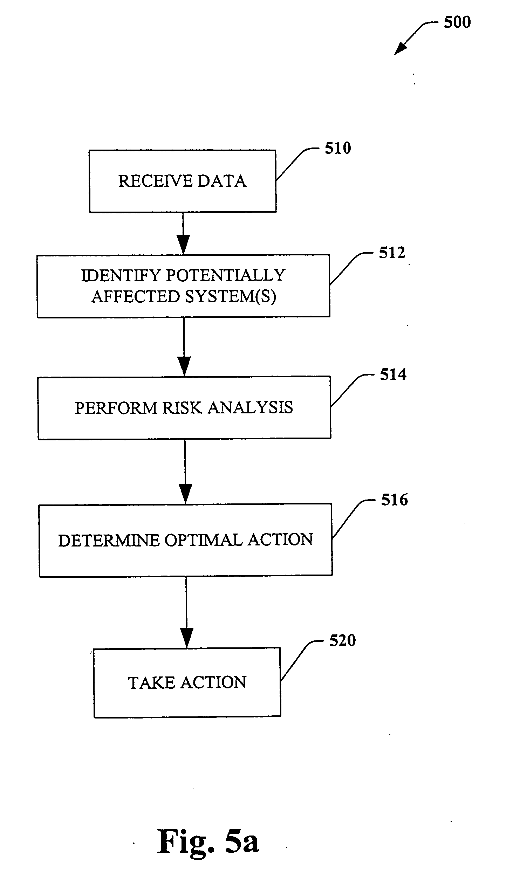

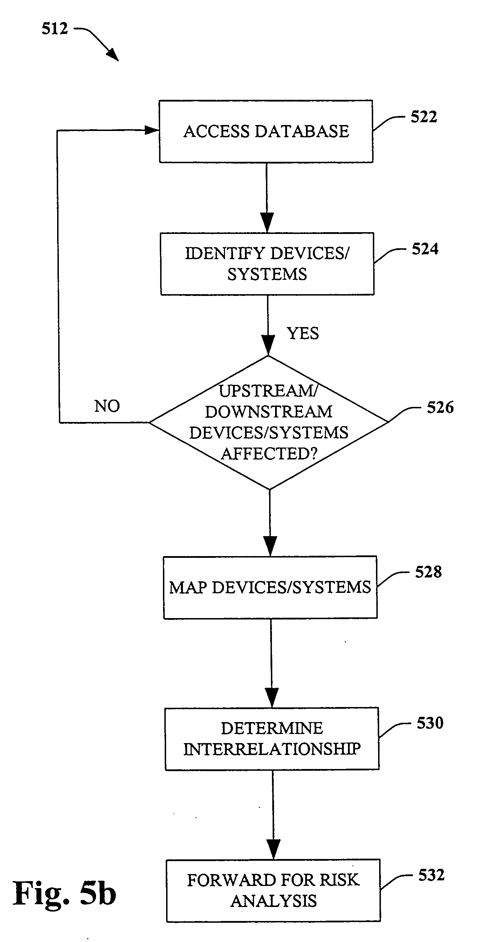

Figs. 5-7 illustrate methodologies that may be implemented in accordance with the present invention. While, for purposes of simplicity of explanation, the methodologies are shown and described as a series of blocks, it is to be understood and appreciated that the present invention is not limited by the order of the blocks, as some blocks may, in accordance with the present invention, occur in different orders and/or concurrently with other blocks from that shown and described herein. Moreover, not all illustrated blocks may be required to implement the methodologies in accordance with the present invention. The invention may be described in the general context of computer-executable instructions, such as program modules, executed by one or more components. Generally, program modules include routines, programs, objects, data structures, *etc.* that perform particular tasks or implement particular abstract data types. Typically the functionality of the program modules may be combined or distributed as desired in various embodiments.

Referring to Fig. 5a, which illustrates a method 500 for determining optimal action based on risk analysis performed relative to a particular set of data. At 510, data is received, and at 512 products, devices, systems, processes and supplier technologies, for example, are mapped to the data. At 514, a risk analysis is performed to determine, infer or predict the level of component risk to EOL or unavailability, and their impact. Such a risk analysis can be accomplished in accordance with risk analysis systems and methods described herein. Based in part on the analysis (*e.g.*, utility-based), at 516 an optimal action to be taken given the evidence is determined. At 520, the action is effected.

Fig. 5b provides additional details in connection with act 512. At 522, a database is accessed, and at 524 a mapping is performed to determine what primary devices, products, systems, processes, suppliers, technologies, individuals, *etc*. are affected by the component data. At 526, determine if tertiary products, devices, systems and the like might be affected. At 528, map specific devices, products, systems, processes, suppliers, technologies and individuals, for example to various desired parameters. At 530, the interrelationship of affected primary and tertiary products, devices, systems...is ascertained. At 532, the results are forwarded for risk analyses.

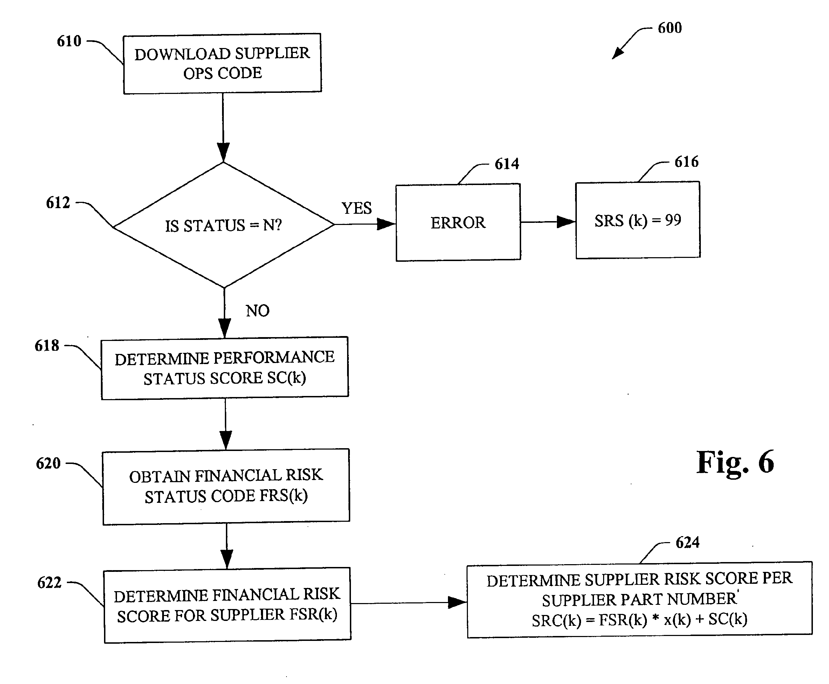

Turning now to Fig. 6, a methodology 600 is shown to determine a supplier risk score (SRS) in accordance with an aspect of the subject invention. The SRS is determined utilizing a supplier financial risk score (FRS) and the performance status score (SC). At 610, a supplier OPS code is downloaded. Each supplier can be assigned a particular OPS code, which is unique to the supplier. In this manner, every supplier can be readily identified and organized *via* any number of desired properties. At 612, a determination is made if the supplier has an OPS code. If the answer is no (status = "N"), then at 614 an error is given and at 616 the SRS is determined to be 99 (*e.g.*, out of 100). Thus, if the supplier does not have an OPS code, then a very high supplier risk score is assigned to that supplier.

If at 612, a supplier has an OPS code (status is not equal to N), the SC of the supplier is determined at 618. The SC can be a function of various parameters associated with the supplier relative to the quality of service they provide to the user. Such parameters can include quality of product, meeting delivery schedule, level of inventory, customer service, *etc.* In addition, the supplier's history of performance can be utilized to determine the current performance score.

At 620, the supplier's financial risk status (FRS) code is determined. Each supplier can have a unique FRS code assigned to it. In addition or alternatively, the FRS code can be assigned to a specific product that the supplier provides. At 622, the financial risk score (FSR) is determined. The FSR can be dependent on a number of factors such as supplier credit history, financial solvency, assets, *etc.* At 624, the SC and FSR are employed to determine the supplier risk score (SRC) per supplier part number.

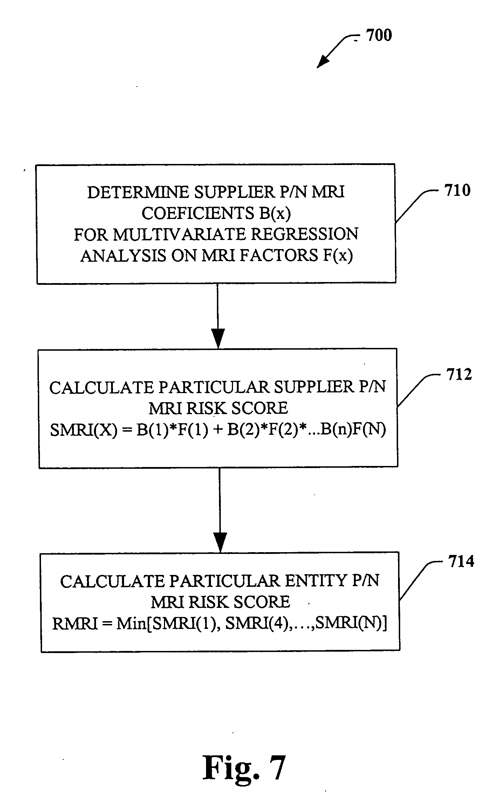

Referring now to Fig. 7, which illustrates a methodology 700 employed to determine a particular entity part number MRI risk score. At 710, supplier part number MRI coefficients B(x) for multivariate regression analysis on MRI factors F(x). Multivariate regression provides a data model to determine a best fit when factors co-vary with each other. Such a model can be employed with MRI analysis to determine if there is a pattern of risk associated with a particular supplier's part number. At 712, once the B(x) coefficients have been determined, a particular supplier part number MRI risk score can be determined. It is to be appreciated that multiple supplier part numbers can be determined at this step. At 714, the supplier part number MRI risk score(s) are employed to determine an entity's part number MRI risk score.

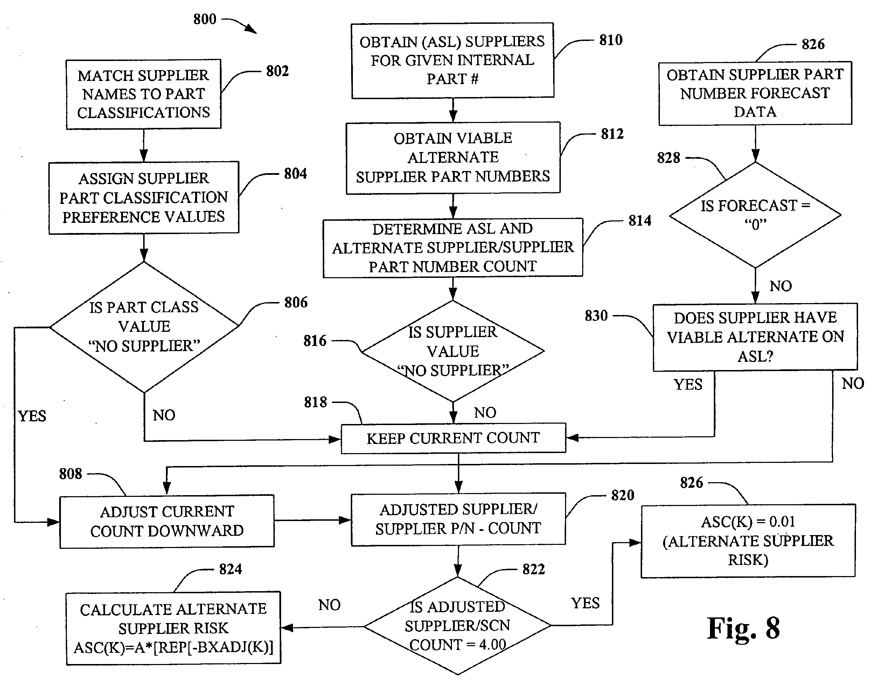

Turning now to Fig. 8, which illustrates a methodology 800 employed to determine alternate supplier/part risk. At 802, supplier names are matched to part classifications in order to find desired suppliers for a particular part. Once the suppliers are determined, part classification preference values are assigned to the suppliers at 804. At 806, a determination is made whether the part class value is "no supplier." If the part class value is "no supplier," the current count is adjusted downward at 808; if the class value is not "no supplier," the current count is kept at 818. The adjusted supplier part number count is made at 820. If the adjusted supplier part number count is equal to 4.00 at 822, the alternate supplier risk (ASC(k)) = 0.01 at 826. Alternatively, if the adjusted supplier part number count is not equal to 4.00, at 824 the alternate supplier risk is calculated *via* the formula ASC(k) = A*[rep[-B(x)Adj(k)].

Referring to 810, (ASL) suppliers for a given internal part number are obtained. At 812, viable alternate supplier part numbers are obtained. At 814, the ASL and alternate supplier / supplier part number count is determined. At 816, if the supplier value is not "no supplier," then the current count is kept at 818 and the alternate supplier risk is determined in steps 820-826, as noted above.

Supplier part number forecast data is obtained at 826 and a check is made at 828 to insure that the forecast is not equal to "0." At 830, assuming the forecast value is "0," a determination is made whether the supplier has a viable alternative on ASL. If there is a viable alternative, the count is kept current at 818. If there is no viable alternative, the current count is adjusted downward at 808. Whether the count is maintained at 818 or adjusted downward at 808, the alternate supplier risk is calculated at steps 820-826, as described above.

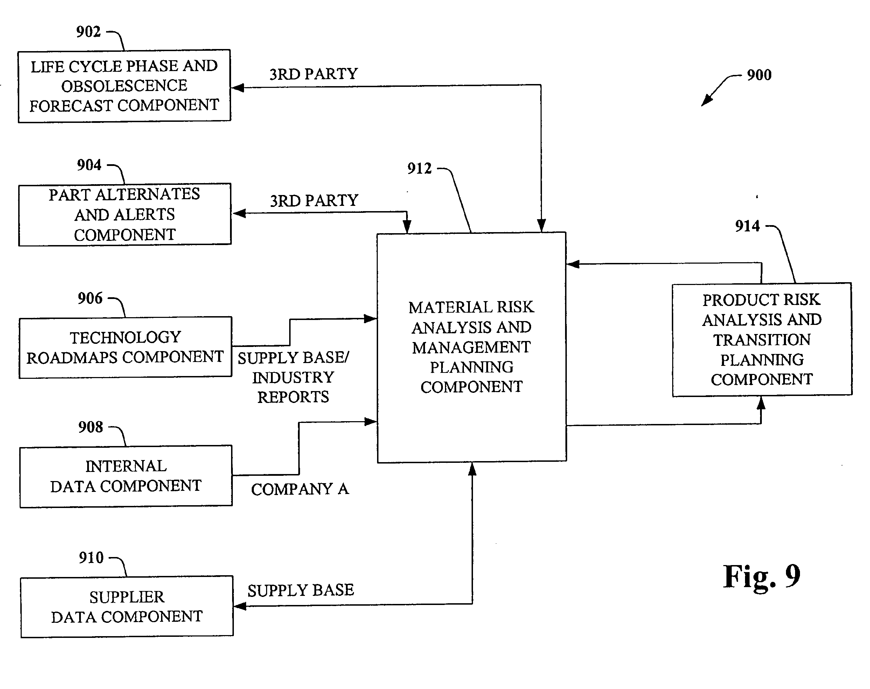

Referring now to Fig. 9, shows a system 900 that employs a material risk analysis (MRA) and management planning component 912 to provide information to a product risk analysis (PRA) and transition planning component 914. The MRA component interfaces to the PRA component based on information obtained from components related to disparate aspects of products that may experience EOL issues such as a life cycle phase and obsolescence forecast component 902, a part alternates and alerts component 904, a technology roadmap component 906, an internal data component 908 and a supplier data component 910.

The life cycle phase (LCP) and obsolescence forecast component 902 can be employed to determine the length of time a particular product has before the product reaches EOL. The LCP component can consider factors such as the length of time the product has been in operation, the current state of technology, cost, average life cycle of similar products, *etc.* Supplier part number and/or internal part number can be employed to organize products at risk. Additionally, products can be sorted by product, family, technology supplier, part number, *etc*. Also, the LCP component can determine the length of time to phase in a new product once a particular product reaches EOL.

The part alternates and alerts (PAA) component 904 can be employed to provide a listing of suitable substitute products for a particular product currently in use. Alerts can be set to notify the user when a particular product has a new alternate or when alternates no longer exist. The technology roadmaps component 906 can maintain a database of current state of the art of various technologies and provide time lines for when new technologies will become available. Various sources can be employed to determine the current state of the art, including industry reports, internal data, a supply base and the like.

The internal data component 908 can supply information not readily available to the public such as internal product testing, quality control issues, *etc.* to the MRA component 912. Additionally, the supplier data component 910 can provide technical information such as sub-components employed in supplier products, length of component use, *etc.*

Thus, by utilizing such information, the MRA component 912 can provide proactive EOL management. Products utilized across business units can be identified and categorized and product volume and revenue forecasting can be provided. The quantity of at-risk components can be determined and a ranking of such components can be created. A link to parametric search and compare, datasheets and supplier websites can be provided to a user *via* the MRA component 912. In addition, supplier preference status can be determined based on supplier risk and financial risk status metrics, for example.

Moreover, the MRA component 912 can interface with the product risk analysis (PRA) and transition planning component 914 to facilitate commodity, technology and part planning processes. The PRA component 914 can facilitate commodity and part plans that can be established and entered into a database. Such a database can provide component volume and standard cost and indicate if a part is on corporate contract. Also, links to internal component history databases can be provided. The MRA component 912 can provide a material risk index (MRI) that can facilitate product action plans. The MRI index can be utilized to provide a product ranking for prioritization (*e*.*g*., what to do and when) that can facilitate a bill of materials analysis run by product, product family, business unit *etc.* In this manner, the PRA component 914 can provide product mitigation plans wherein links can be provided to an internal historic product corrective actions database(s) to leverage past experiences. Thus, the system 900 can provide proactive EOL management as it relates to any number of desired products.

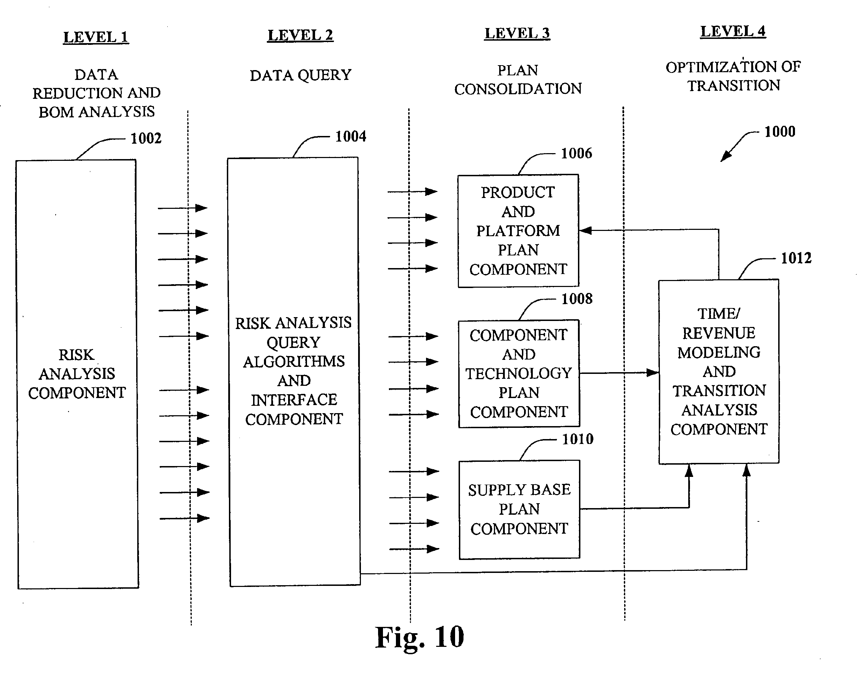

Referring now to Fig. 10, a system 1000 that illustrates implementing risk analysis data to facilitate transition from current product use to new product use, in accordance with an aspect of the subject invention. The system illustrates four levels of implementation of risk analysis data, as described above. At level 1, a risk analysis component 1002 can provide bill of material analysis and data reduction, as described *supra*. Such risk analysis data can be queried *via* a risk analysis query algorithms and interface component 1004 at level 2 to be implemented in one or plans at level 3 such as for example, a product and platform plan component 1006, a component and technology plan component 1008 and a supply base plan component 1010. Such plans can be consolidated and employed in time/revenue modeling and transition analysis component 1012 to provide optimal transition from an EOL product to a new product, for example.

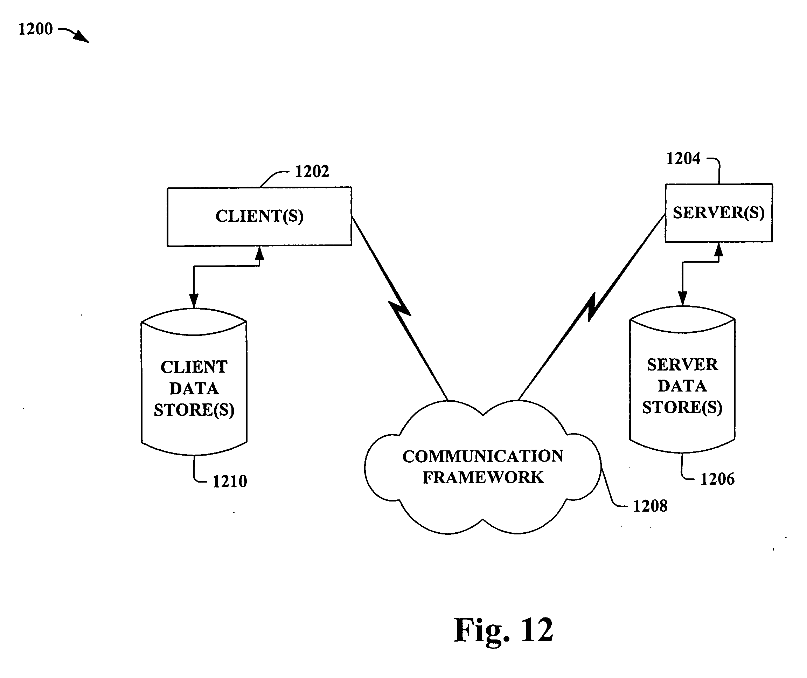

In order to provide additional context for implementing various aspects of the present invention, Fig. 12 and the following discussion is intended to provide a brief, general description of a suitable computing environment 1200 in which the various aspects of the present invention may be implemented. While the invention has been described above in the general context of computer-executable instructions of a computer program that runs on a local computer *and*/*or* remote computer, those skilled in the art will recognize that the invention also may be implemented in combination with other program modules. Generally, program modules include routines, programs, components, data structures, *etc.,* that perform particular tasks *and*/*or* implement particular abstract data types. Moreover, those skilled in the art will appreciate that the inventive methods may be practiced with other computer system configurations, including single-processor or multi-processor computer systems, minicomputers, mainframe computers, as well as personal computers, hand-held computing devices, microprocessor-based *and*/*or* programmable consumer electronics, and the like, each of which may operatively communicate with one or more associated devices. The illustrated aspects of the invention may also be practiced in distributed computing environments where certain tasks are performed by remote processing devices that are linked through a communications network. However, some, if not all, aspects of the invention may be practiced on stand-alone computers. In a distributed computing environment, program modules may be located in local *and*/*or* remote memory storage devices.

As used in this application, the term "component" is intended to refer to a computer-related entity, either hardware, a combination of hardware and software, software, or software in execution. For example, a component may be, but is not limited to, a process running on a processor, a processor, an object, an executable, a thread of execution, a program, and a computer. By way of illustration, an application running on a server *and*/*or* the server can be a component. In addition, a component may include one or more subcomponents.

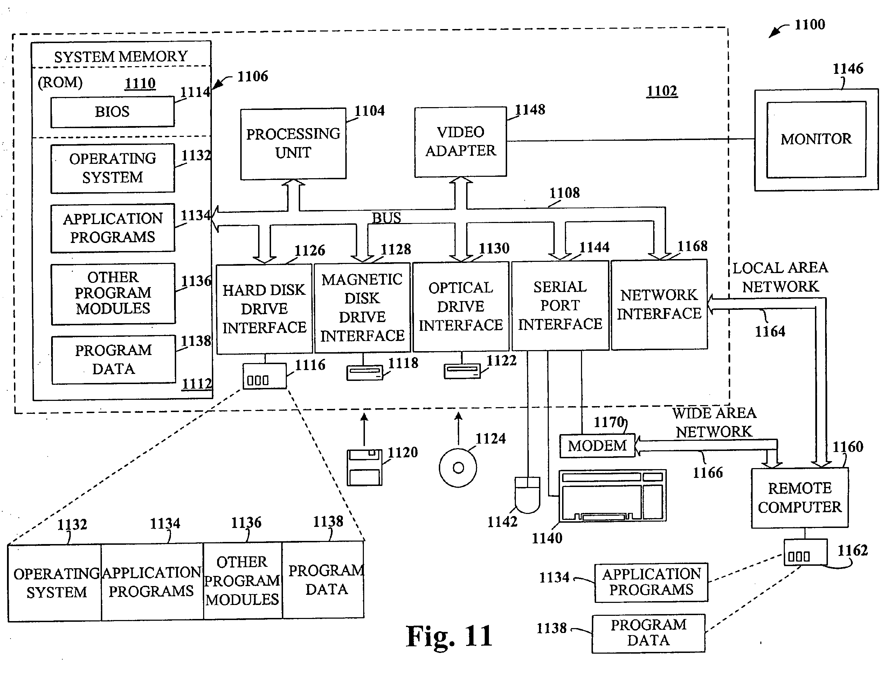

With reference to Fig. 11, an exemplary system environment 1100 for implementing the various aspects of the invention includes a conventional computer 1102, including a processing unit 1104, a system memory 1106, and a system bus 1108 that couples various system components, including the system memory, to the processing unit 1104. The processing unit 1104 may be any commercially available or proprietary processor. In addition, the processing unit may be implemented as multi-processor formed of more than one processor, such as may be connected in parallel.

The system bus 1108 may be any of several types of bus structure including a memory bus or memory controller, a peripheral bus, and a local bus using any of a variety of conventional bus architectures such as PCI, VESA, Microchannel, ISA, and EISA, to name a few. The system memory 1106 includes read only memory (ROM) 1110 and random access memory (RAM) 1112. A basic input/output system (BIOS) 1114, containing the basic routines that help to transfer information between elements within the computer 1102, such as during start-up, is stored in ROM 1110.

The computer 1102 also may include, for example, a hard disk drive 1116, a magnetic disk drive 1118, e.g., to read from or write to a removable disk 1120, and an optical disk drive 1122, e.g., for reading from or writing to a CD-ROM disk 1124 or other optical media. The hard disk drive 1116, magnetic disk drive 1118, and optical disk drive 1122 are connected to the system bus 1108 by a hard disk drive interface 1126, a magnetic disk drive interface 1128, and an optical drive interface 1130, respectively. The drives 1116-1122 and their associated computer-readable media provide nonvolatile storage of data, data structures, computer-executable instructions, *etc*. for the computer 1102. Although the description of computer-readable media above refers to a hard disk, a removable magnetic disk and a CD, it should be appreciated by those skilled in the art that other types of media which are readable by a computer, such as magnetic cassettes, flash memory cards, digital video disks, Bernoulli cartridges, and the like, can also be used in the exemplary operating environment 1100, and further that any such media may contain computer-executable instructions for performing the methods of the present invention.

A number of program modules may be stored in the drives 1116-1122 and RAM 1112, including an operating system 1132, one or more application programs 1134, other program modules 1136, and program data 1138. The operating system 1132 may be any suitable operating system or combination of operating systems. By way of example, the application programs 1134 and program modules 1136 can include inferring a location of a device in accordance with an aspect of the present invention.

A user can enter commands and information into the computer 1102 through one or more user input devices, such as a keyboard 1140 and a pointing device (*e.g.*, a mouse 1142). Other input devices (not shown) may include a microphone, a joystick, a game pad, a satellite dish, wireless remote, a scanner, or the like. These and other input devices are often connected to the processing unit 1104 through a serial port interface 1144 that is coupled to the system bus 1108, but may be connected by other interfaces, such as a parallel port, a game port or a universal serial bus (USB). A monitor 1146 or other type of display device is also connected to the system bus 1108 *via* an interface, such as a video adapter 1148. In addition to the monitor 1146, the computer 1102 may include other peripheral output devices (not shown), such as speakers, printers, *etc*.

It is to be appreciated that the computer 1102 can operate in a networked environment using logical connections to one or more remote computers 1160. The remote computer 1160 may be a workstation, a server computer, a router, a peer device or other common network node, and typically includes many or all of the elements described relative to the computer 1102, although, for purposes of brevity, only a memory storage device 1162 is illustrated in Fig. 11. The logical connections depicted in Fig. 11 can include a local area network (LAN) 1164 and a wide area network (WAN) 1166. Such networking environments are commonplace in offices, enterprise-wide computer networks, intranets and the Internet.

When used in a LAN networking environment, for example, the computer 1102 is connected to the local network 1164 through a network interface or adapter 1168. When used in a WAN networking environment, the computer 1102 typically includes a modem (e.g., telephone, DSL, cable, etc.) 1170, or is connected to a communications server on the LAN, or has other means for establishing communications over the WAN 1166, such as the Internet. The modem 1170, which can be internal or external relative to the computer 1102, is connected to the system bus 1108 *via* the serial port interface 1144. In a networked environment, program modules (including application programs 1134) *and*/*or* program data 1138 can be stored in the remote memory storage device 1162. It will be appreciated that the network connections shown are exemplary and other means (e.g., wired or wireless) of establishing a communications link between the computers 1102 and 1160 can be used when carrying out an aspect of the present invention.

In accordance with the practices of persons skilled in the art of computer programming, the present invention has been described with reference to acts and symbolic representations of operations that are performed by a computer, such as the computer 1102 or remote computer 1160, unless otherwise indicated. Such acts and operations are sometimes referred to as being computer-executed. It will be appreciated that the acts and symbolically represented operations include the manipulation by the processing unit 1104 of electrical signals representing data bits which causes a resulting transformation or reduction of the electrical signal representation, and the maintenance of data bits at memory locations in the memory system (including the system memory 1106, hard drive 1116, floppy disks 1120, CD-ROM 1124, and remote memory 1162) to thereby reconfigure or otherwise alter the computer system's operation, as well as other processing of signals. The memory locations where such data bits are maintained are physical locations that have particular electrical, magnetic, or optical properties corresponding to the data bits.

Fig. 12 is another block diagram of a sample computing environment 1200 with which the present invention can interact. The system 1200 further illustrates a system that includes one or more client(s) 1202. The client(s) 1202 can be hardware *and*/*or* software (*e*.*g*., threads, processes, computing devices). The system 1200 also includes one or more server(s) 1204. The server(s) 1204 can also be hardware *and*/*or* software (*e*.*g*., threads, processes, computing devices). The server(s) 1204 can house threads to perform transformations by employing the present invention, for example. One possible communication between a client 1202 and a server 1204 may be in the form of a data packet adapted to be transmitted between two or more computer processes. The system 1200 includes a communication framework 1208 that can be employed to facilitate communications between the client(s) 1202 and the server(s) 1204. The client(s) 1202 are operably connected to one or more client data store(s) 1210 that can be employed to store information local to the client(s) 1202. Similarly, the server(s) 1204 are operably connected to one or more server data store(s) 1206 that can be employed to store information local to the server(s) 1204.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
In summary the present invention relates to a system and methodology for facilitating managing product life cycle. A component that determines relevance of components to a product; an analyzing component that determines, infers or predicts obsolescence, level of risk to EOL of a subset of the components. A substitution component that identifies replacement components and suppliers for the subset of components. A cost analysis component that determines material/components cost savings, and redesign cost implementation and/or redesign cost avoidance.

## Claims

1. A system that facilitates managing product life cycle, comprising:
a component that determines relevance of components to a product; and
an analyzing component that determines, infers or predicts obsolescence and/or Risk to end-of-life (EOL) of a subset of the components.

2. The system of claim 1, further comprising a substitution component that identifies replacement components for the subset of components.

3. The system of claim 2, the substitution component identifying suppliers of the replacement components.

4. The system of claim 3, the substitution component determining availability and/or Risk of use of the replacement components.

5. The system of claim 4, the substitution component determining supply of the replacement components.

6. The system of one of claims 1 to 5, the substitution component determining cost of the replacement components.

7. The system of one of claims 1 to 6, further comprising an artificial intelligence (AI) component that performs a probabilistic based analysis of the obsolescence-related risk, and /or level of risk to EOL associated with the components.

8. The system of one of claims 1 to 7, further comprising an artificial intelligence (AI) component that performs a statistical based analysis of the obsolescence-related risk, and/or level of risk to EOL associated with the components.

9. The system of one of claims 1 to 8, further comprising an artificial intelligence (AI) component that performs a rule-based analysis of the obsolescence-related risk, and /or level of risk to EOL associated with the components.

10. The system of one of claims 1 to 9, further comprising a tracking component that dynamically monitors availability of the subset of components.

11. The system of one of claims 1 to 10, further comprising a tracking component that dynamically monitors availability of the replacement components.

12. The system of one of claims 1 to 11, further comprising a cost analysis component that determines savings relative to redesign avoidance efforts not previously identified prior to initiating a Materials Risk Analysis.

13. The system of one of claims 1 to 12, the substitution component determining cost to implement the replacement components.

14. The system of one of claims 1 to 13, the substitution Component determining component cost savings from implementation of the replacement components.

15. A computer implemented method to facilitate component management, comprising:
identifying the level of component risk to obsolete, EOL or unavailable;
determining risk associated with obsolescence, EOL or unavailability of a subset of the components; and
determining suitable replacement components for any of the subset of components having an undesirable level of risk.

16. The method of claim 15, further comprising dynamically tracking the identified components.

17. The method of claim 15 or 16 further comprising identifying suppliers of the replacement components.

18. The method of claims 15, 16, or 17 further comprising automatically ordering the replacement components.

19. The method of one of claims 15 to 18, further comprising performing a probabilistic-based utility analysis in connection with determining suitable replacement components.

20. The method of one of claims 15 to 19, further comprising performing a statistical-based utility analysis in connection with determining suitable replacement components.

21. A computer readable medium having stored thereon computer executable instructions for carrying out the method of claim 15.

22. A computer readable medium having stored thereon the computer executable components of claim 1.

23. A computer implemented system to facilitate component management, comprising:
means for identifying the level of component risk to obsolete, EOL or unavailable;
means for analyzing risk associated with obsolescence, level of risk to EOL or unavailability of a subset of the components; and
means for determining suitable replacement components and suppliers of replacement components for any of the subset of components having an undesirable level of risk.
